# EUROPEAN PATENT APPLICATION

(11) **EP 3 062 242 A1**
(43) Date of publication of application: **31.08.2016**
(21) Application number: 15191098.1
(22) Date of filing: 22.10.2015
(51) Int. Cl.: G06F 17/30, G06Q 30/02

(54) **SYSTEM AND METHOD FOR INFORMATION PUSHING AND REDIRECTING**

(30) Priority: 26.02.2015 TW 104106367
(71) Applicant: Aircom Pacific Inc, San Jose, CA 95113 (US)
(72) Inventor: SHIH, Daniel, Dublin, CA California (US)
(74) Representative: Arpe Fernandez, Manuel de

(57) **Abstract**

Disclosed is a system for information pushing and redirecting, and a method thereof is also disclosed. The system includes a network supply device and a server. The network supply device is connected to a user device, and is configured to allow the user device to be connected to the network therethrough. The server is connected to the network supply device through the network, which includes a data transmitter, a database and a processor. The processor is configured to determine whether a received keyword or URL corresponds to a plurality of keywords and a plurality of URLs. If yes, the processor is configured to control the network supply device to redirect the user device to a corresponding redirecting URL, or to provide corresponding pushing information on a platform of the user device.

## Description

### BACKGROUND OF THE INVENTION

### 1. Field of the Invention

The present invention relates to a system and a method for information pushing and redirecting, specifically to a system and a method for information pushing and redirecting in which a user device is connected to the internet through the network service provided by the network providers and when the user desires to perform keyword searching or enters URL to access webpages, an effective information pushing and website redirection can be achieved.

### 2. Description of the Related Art

The internet service providers (ISP), telecommunication companies, and wireless network providers usually install the wireless application protocol (WAP) at airport lounges, hotel lobbies, and coffee bar etc. Types of public WAP are usually called as "hot spots", which allow wireless computer users to access a computer network through the wireless connection between the wireless network interface card built in the user's computer and the public WAP, and allow the computer users to access the internet.

In addition, many services on the World Wide Web (abbreviated WWW) currently make use of special devices for publishing advertisements. That is, when a user uses certain search engines for searching, some advertisements will be displayed to the users during the searching. These advertisements are sometimes called "banner", because these kinds of advertisements simulates the banner users to be seen by the users during searching through the computer network. These advertisements are usually posted on a particular searching information content page to be seen by the users during the searching. The current state of development of this technology is: when the user uses a search engine, a randomly selected advertisement will be displayed. The advertisement is just like a part of the searching information content page.

However, the problems produced by the current state of the technology described above is that: the internet providers usually need to provide free network services, but benefits can not be gained through providing network services at the same time. Therefore, this reduces the intention of the network providers to provide network services. In addition, the network providers can not provide efficient information pushing when the users perform searching or website connection. Due to these reasons described above, there is an urgent need to create benefits for the network providers and provide efficient information pushing when the users perform searching or website connection in order to dramatically reduce the costs of network services provided by the network providers.

### SUMMARY OF THE INVENTION

In order to solve the problems described above, an aspect of the present invention provides a system for information pushing and redirecting which is applicable to at least one user device. The at least one user device provides a platform for users to enter at least one keyword to perform searching and enter uniform resource locator (URL) to access webpages. The system for information pushing and redirecting includes an external network supply device and a server. The external network supply device is connected to the at least one user device and allows the at least one user device to be connected to the internet through the external network supply device via the configuration. The server is connected to the external network supply device through the internet, which includes a data transmitter, a database and a processing unit. The data transmitter receives the keyword or URL inputted by an user through the at least one user device via the internet. The database stores a plurality of keywords, a plurality of URLs, pushing information corresponding to the plurality of keywords and a plurality of redirecting URLs corresponding to the plurality of URLs. The processing unit is electrically connected to the data transmitter and the database and determines whether the received keywords or URLs correspond to the plurality of keywords and the plurality of URLs in the database via the configuration. If so, the processing unit is configured to control the external network supply device through the internet and direct to the inputted URL of the at least one user device to perform redirection to the corresponding redirecting URL, or direct to the entered keyword to provide the corresponding pushing information on the platform.

Preferably, the database may further include a plurality of reminder messages corresponding to the plurality of URLs. When the processing unit is configured to control the external network supply device through the internet and direct to the inputted URL of the at least one user device to perform redirection, the corresponding reminder message is provided to the at least one user device.

Preferably, the server may further be connected to a plurality of company servers through the internet and the pushing information and the plurality of redirecting URLs may synchronize with the plurality of company servers.

Preferably, the corresponding pushing information provided on the platform may further include graphics, audio objects, video objects, text objects and interactive objects provided by the plurality of company servers.

Preferably, the corresponding pushing information provided on the platform directing to the inputted keywords may further be configured to be displayed as searching results after the user accesses to the pushing information.

According to another aspect of the present invention, a method for information pushing and redirecting is provided, which uses the system for information pushing and redirecting described above. The method for information pushing and redirecting includes the following steps: configuring the at least one user device to be connected to the internet through the external network supply device; configuring the data transmitter to receive the keyword or URL inputted by the user through the at least one user device via the internet; and configuring the processing unit to determine whether the received keywords or URLs correspond to the plurality of keywords and the plurality of URLs in the database, if so, the processing unit is configured to control the external network supply device through the internet and direct to the inputted URL of the at least one user device to perform redirection to the corresponding redirecting URL, or direct to the entered keyword to provide the corresponding pushing information on the platform.

Preferably, the database may further include a plurality of reminder messages corresponding to the plurality of URLs. And in the step of configuring the processing unit to control the external network supply device through the internet and direct to the inputted URL of the at least one user device to perform redirection, the corresponding reminder message is provided to the at least one user device.

Preferably, the server may further be connected to a plurality of company servers through the internet and the pushing information and the plurality of redirecting URLs may synchronize with the plurality of company servers.

Preferably, in the step of configuring the processing unit to provide the corresponding pushing information on the platform, the corresponding pushing information may further include graphics, audio objects, video objects, text objects and interactive objects provided by the plurality of company servers.

Preferably, in the step of configuring the processing unit to provide the corresponding pushing information on the platform, the corresponding pushing information may further be configured to be displayed as searching results after the user accesses to the pushing information.

In conclusion, the system and the method for information pushing and redirecting of the present invention may direct to provide the pushing information of related companies while the users perform keyword searching and webpage browsing. Apart from the cost of network providers can be dramatically reduced, the demand for searching of the user can be satisfied and a platform can also be provided to the advertisement owners to perform information pushing efficiently. Thus, the framework of triple wins system can be achieved and created.

### BRIEF DESCRIPTION OF THE DRAWINGS

FIG. 1 is a block diagram depicted according to the first embodiment of the system for information pushing and redirecting of the present invention.
FIG. 2 is a block diagram depicted according to the second embodiment of the system for information pushing and redirecting of the present invention.
FIG. 3 is a schematic diagram of the user device depicted according to the exemplary embodiment of the system for information pushing and redirecting of the present invention.
FIG. 4 is a schematic diagram of the user device depicted according to the exemplary embodiment of the system for information pushing and redirecting of the present invention.
FIG. 5 is a flowchart according to the first embodiment of the method for information pushing and redirecting of the present invention.
FIG. 6 is a flowchart according to the second embodiment of the method for information pushing and redirecting of the present invention.

### DETAILED DESCRIPTION OF THE PREFERRED EMBODIMENTS

In order to facilitate the understanding of the features, the contents and the advantages of the present invention, and the effectiveness thereof that can be achieved, the present invention will be illustrated in detail below through embodiments with reference to the accompanying drawings. On the other hand, the diagrams used herein are merely intended to be schematic and auxiliary to the specification, but are not necessary to be true scale and precise configuration after implementing the present invention. Thus, it should not be interpreted in accordance with the scale and the configuration of the accompanying drawings to limit the scope of the present invention on the practical implementation.

In accordance with the embodiment(s) of the present invention, the components, process steps, and/or data structures described herein may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine, they may be stored on a tangible medium such as a computer memory device (e.g., ROM (Read Only Memory), PROM (Programmable Read Only Memory), EEPROM (Electrically Erasable Programmable Read Only Memory), FLASH Memory, Jump Drive, and the like), magnetic storage medium (e.g., tape, magnetic disk drive, and the like), optical storage medium (e.g., CD-ROM, DVD-ROM, paper card and paper tape, and the like) and other known types of program memory.

Hereinafter, various units, modules, elements or components may be described or claimed as "configured to" for performing tasks. On this premise, "configured to" is used to imply structures through indicating structures included in units/ components and performing the tasks in the operation. Thus, even when particular units / components are not in operation (for example, not switched on / started), units / components can still be called to be configured to perform the tasks.

The embodiment according to the multimedia identification information pushing system of the present invention will be illustrated below with reference to the relevant drawings. For the ease of understanding, the same elements in the following embodiments are denoted by the same reference numerals. The detailed descriptions are as follows:

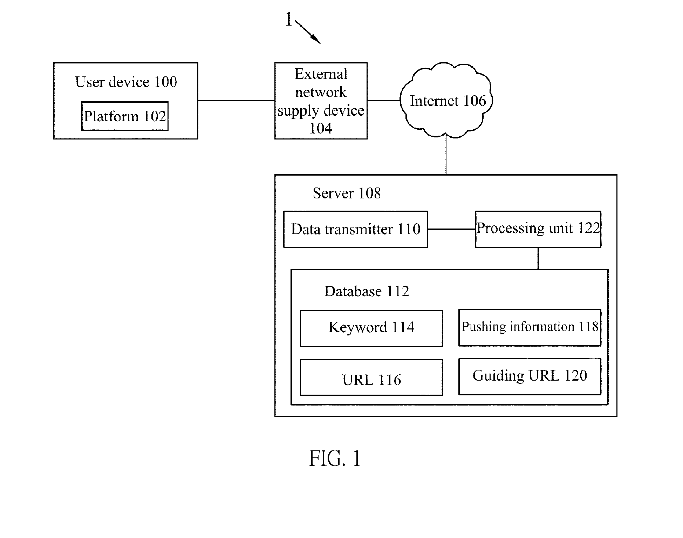

FIG. 1 is a block diagram depicted according to the first embodiment of the system for information pushing and redirecting of the present invention. Please refer to FIG. 1, a system for information pushing and redirecting 1 which is applicable to a user device 100 is depicted. The user device 100 provides a platform 102 for users to enter keywords to perform searching and enter URL to access webpages. In general, the platform 102 may be a webpage browser, which displays a website server or files in a file system and allows users to interact with the files. The webpage browser is used to display texts, images and other information in the WWW or LAN. These texts or images may be hyperlinks which connect to other URLs and enables the users to browse a variety of information quickly and easily. The conventional webpage browsers are generally connected to the search engines. When those search engines are used to perform searching, advertisements called "banners" will be displayed to the users during searching. These advertisements are displayed during browsing through a computer network and are usually a part of searching information content pages.

Here, the user device 100 system is a personal device with network connection capability, such as a personal computer, a tablet computer, a notebook computer or a smart phone etc., and includes a processor which executes and displays a platform 102, for example, a central processing unit (CPU), a microprocessor, a network processors (NP), a microcontroller, or a semiconductor integrated circuit (IC) with specific functions, which are configured to execute and display the platform 102 via the configuration and also include an input / output module for the users to interact with the platform 102.

The system for information pushing and redirecting 1 of the present embodiment includes an external network supply device 104 and a server 108. The external network supply device 104 is connected to the user device 100 and allows the user device 100 to be connected to the internet 106 through the external network supply device 104 via the configuration. The external network supply device 104 may be a central network which is connected to the user device 100. The external network supply device 104 usually uses the ethernet, but may be connected to the user device 100 by wireless manner. The external network supply device 104 can also widely include a router or a switch which are connected to the ethernet, and a plurality of servers which are connected to a cable and wireless internet. Preferably, the external network supply device 104 may be a wireless network system provided by a network provider. The wireless network system may exist independently and may cooperate with between a wireless network system, a mobile communication network and a cable and wireless internet.

The system for information pushing and redirecting 1 also includes a server 108 disposed at the cloud. The server 108 is connected to the external network supply device 104 through the internet, which includes a data transmitter 110, a database 112 and a processing unit 122. In the embodiment, when the users enter a keyword or URL in the platform 102, the data transmitter 110 receives the keyword or URL inputted by the users through internet 106. Here, the data transmitter 110 may include a hardware, a software and / or a companyware in which videos, graphics, audio signals or data of compressed or converted digital codes or digital codes series are transmitted to the internet 106 directly or via a router.

The database 112 stores a plurality of keywords 114, a plurality of URLs 116, pushing information 118 corresponding to the plurality of keywords 114 and a plurality of redirecting URLs 120 corresponding to the plurality of URLs 116. The database 112 is usually realized by conventional auxiliary memory devices semiconductor memory device, hard disk drive (HDD) or solid state drive (SSD) such as random access memory (RAM), read only memory (ROM), electrically erasable and programmable read only memory (EEPROM) or flash memory etc., or removable disks such as digital versatile disk (DVD) etc. or storage medias such as secure digital memory card (SD memory card) etc. in this field. Or storage devices such as direct attached storage (DAS), fibre channel-storage area network (FC-SAN), network attached storage (NAS) etc. may also be used to realize.

Preferably, the pushing information 118 corresponding to the plurality of keywords 114 and the plurality of redirecting URLs 120 corresponding to the plurality of URLs 116 are usually provided by the network providers of the external network supply device 104. Or alternatively, they are provided by companies which have contractual relationships with the network providers. The pushing information 118 usually includes advertisement information related to the companies, for example, advertisement links, article trading windows, frames, or links for online shopping etc., but they are not limited thereto. The plurality of redirecting URLs 120 may usually be the webpage of the companies. The pushing information 118 and the plurality of redirecting URLs 120 can store videos, graphics, audio signals or data format of compressed or converted digital codes or digital codes series in the database 112.

The system for information pushing and redirecting 1 also includes a processing unit 122, which is electrically connected to the data transmitter 110 and the database 112. Here, the processor 112 may be a central processing unit (CPU), a microprocessor, a network processor (NP), a microcontroller, or a semiconductor integrated circuit with specific functions (IC), which are configured to determine whether the keywords or URLs received by the data transmitter 110 through the internet 106 correspond to the plurality of keywords 216 and the plurality of URLs 218 in the database via the configuration. If the result of determination is "Yes", the processing unit 122 is configured to control the external network supply device 104 through the internet 106 and direct to the inputted URL of the user device to perform redirection of the platform 102 to the corresponding redirecting URL 120 and display the contents of the website on the platform 102, or direct to the keywords entered by the users on the platform 102 to provide the corresponding pushing information 118 on the platform 102.

Here, it should be understood that, the current publicly familiar search engines usually use "banners" to perform the advertisement information pushing, or links of the advertisement owners related to the search engine providers are embedded in the searching results when the searching results are displayed. However, when the user device 100 is connected to the internet 106 through the external network supply device 104 of the system for information pushing and redirecting 1 of the present invention, the searching results displayed on the platform 102 are compiled by the server 108. The processing unit 122 of the server 108 further includes the hardware, the companyware or the software which can identify the banner objects and the links of the advertisement owners provided in the searching results of keywords. The banner objects and the links of the advertisement owners are to be replaced by the pushing information 118 corresponding to the keywords inputted by the users, but are not limited thereto. The processing unit 122 can also identify all of the graphics, audio objects, video objects, text objects and interactive objects when the searching results are displayed on the platform 102, and these objects are further replaced by graphics, audio objects, video objects, text objects or interactive objects provided by the company servers which is provided by the companies related to the network providers described above.

In addition, when the processing unit 122 is configured and directs to the URL inputted by the user device 100 to control the external network supply device 104 such that the platform 102 performs redirection through the redirecting URL 120, the pushing information 118 related to the redirecting URL 120 can also be displayed in advance and the pushing information 118 may further be configured to be the displayed searching results and the webpage contents of the redirecting URL 120 after the users access to the pushing information. In this way, with the system for information pushing and redirecting provided by the present invention, the cost of the network providers can be reduced through providing the pushing information of the related companies. The demand for searching of the users can be satisfied and the most efficient information pushing can also be provided to the advertisement owners. Thus, the framework of triple wins system can be achieved and created.

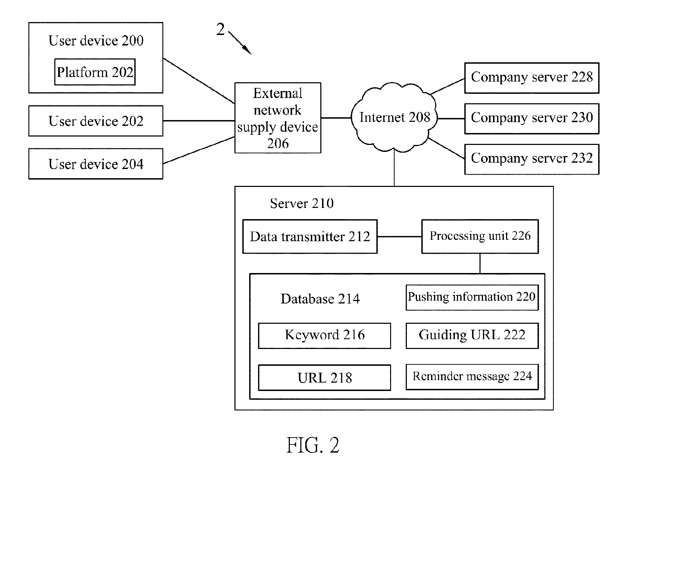

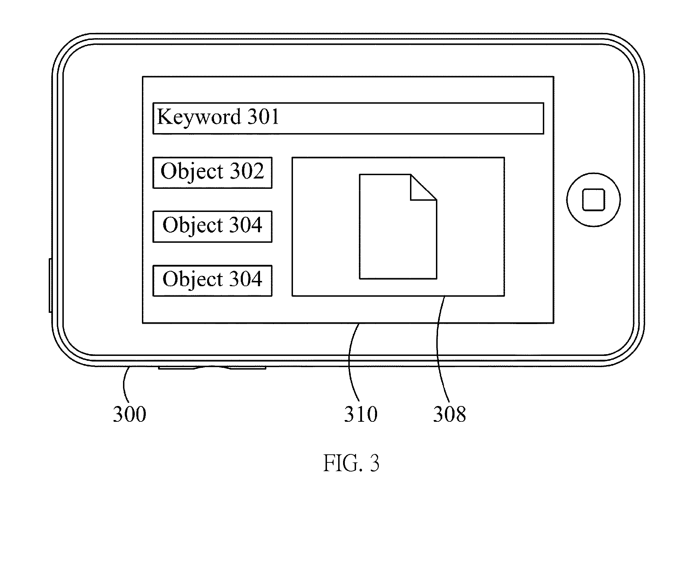

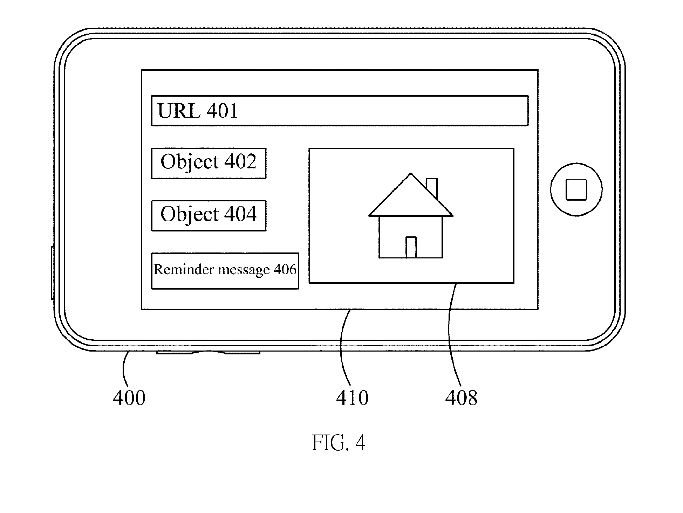

FIG. 2 is a block diagram depicted according to the second embodiment of the system for information pushing and redirecting of the present invention. FIG. 3 and FIG. 4 are schematic diagrams of the user device depicted according to the exemplary embodiment of the system for information pushing and redirecting of the present invention. The second embodiment of the system for information pushing and redirecting will now be illustrated with reference to FIG. 2. Wherein a user device 200 of a platform 202, an external network supply device 204, an internet 208 and a server 210 are provided, which correspond to the user device 100 and the platform 102, the external network supply device 104 and a server 108. For clarity, the duplicated descriptions thereof will be omitted.

The difference between the first embodiment and the second embodiment is that, in the system for information pushing and redirecting 2, a plurality of user devices 200, 202 and 204 can be connected to the internet 208 through an external network supply device 206, and the server 210 may be further connected to a plurality of company servers 228, 230 and 232 through the internet, and pushing information 220 and a plurality of redirecting URLs 222 system synchronize with a plurality of company servers 228, 230, and 232. The company servers 228, 230, and 232 may respectively login to modify the pushing information 220 and the plurality of redirecting URLs 222 stored in the database through the company interface or the advertisement owner interface provided by the network provider via the internet. The companies may perform synchronization and update information instantly at cloud and at anytime through the company servers 228, 230, and 232 based on the requirements.

In addition, the database 214 may further store a plurality of reminder messages 222 corresponding to the plurality of URLs 218. When the processing unit 226 is configured to control the external network supply device 206 through the internet 208 and direct to the inputted URL of the user devices 200, 202 and 204 to perform redirection, the corresponding reminder message is provided to the user devices 200, 202 and 204. For example, when the users input an URL of website A through the platform 202 of the user device 200, the processing unit 226 receives the URL of the website A and determines whether the URL matches with the plurality of URLs 218 stored in the database 214. When it is determined as "Yes", the processing unit 226 is configured and directs to the platform 202 of the user device 200 to perform redirection to the redirecting URL 222 corresponding to the inputted URL. A corresponding reminder message 224 is first provided to remind the users that the redirection will be performed before the redirection is performed. The embodiment about sending the pushing information and redirection will be illustrated with reference to Fig. 3 and FIG. 4.

For example, a client device 300 is set to be connected to the internet through the external network supply device provided by the network providers. When the users input keywords 301 through a platform 310 provided by the client device 300, a server disposed by the network provider receives keywords 301 for which the users intend to search and performs a step of determination. A processing unit of the server is configured to determine whether the keywords 301 correspond to a plurality of keywords stored in the database, if so, the pushing information is then sent to the client device 300 through the data transmitter. As shown in the figure, the platform 310 displays a searching result 308 and objects 302, 304 and 306 at this moment. The objects 302, 304 and 306 are in positions of advertisement banners originally placed by the search engine used on the platform 310 and are replaced by the corresponding pushing information at this moment. Here, the pushing information may be graphics, audio objects, video objects, text objects and interactive objects provided by the plurality of company servers, but are not limited thereto.

In another example, a client device 400 is set to be connected to the internet through the external network supply device provided by the network providers. When the users input URL 401 through a platform 410 provided by the client device 400, a server disposed by the network provider receives URL 401 to which the users intend to connect and performs a step of determination. A processing unit of the server is configured to determine whether the URL 401 correspond to a plurality of URLs stored in the database, if so, the processing unit is then configured to control the external network supply device through the data transmitter, such that the platform 410 of the client device 400 is redirected a corresponding redirecting URL.

As shown in the figure, the platform 410 displays a webpage frame 408, objects 402 and 404 and a reminder message 406. The reminder message 406 reminds the users that the webpage will be redirected to the redirecting URL and the objects 402 and 404 are the corresponding pushing information. Here, the pushing information may be graphics, audio objects, video objects, text objects and interactive objects provided by the plurality of company servers, but are not limited thereto. Preferably, the reminder message 406 also informs the users that the object 402 or 404 has to be clicked first such that URL 401 can then be connected or redirected. The webpage of URL 401 or redirecting URL will be displayed in the webpage frame 408 after the users click the object 402 or 404 according to the reminder message 406. In this way, with the system for information pushing and redirecting provided by the present invention, no matter the users intend to perform keywords searching or enter URL to access webpages, the information pushing can be efficiently performed on the platform.

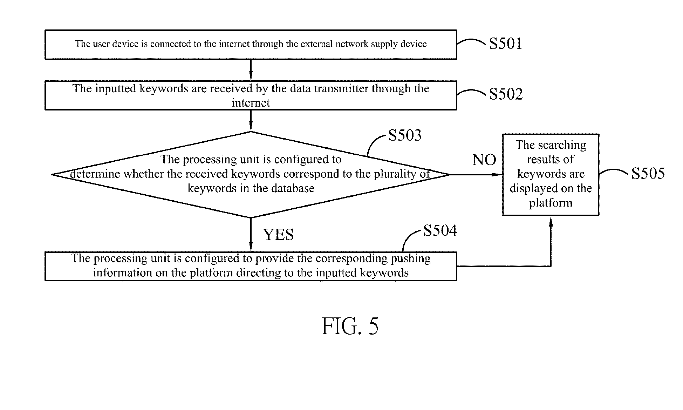

FIG. 5 is a flowchart according to the first embodiment of the method for information pushing and redirecting of the present invention. The first embodiment according to the method for information pushing and redirecting of the present invention will now be illustrated with reference to FIG. 5. Wherein, the method for information pushing and redirecting of the present invention adopts the system for information pushing and redirecting as described above, which includes the following steps:

First, the user device is connected to the internet through the external network supply device (Step S501). The external network supply device is provided by internet service provider (ISP), telecommunication company or wireless network provider. The user device may be connected to the external network supply device by cable or wireless mechanism. Then, the inputted keywords are received by the data transmitter through the internet (Step S502). Here, as described above, the users input keywords through the platform provided by the user device to perform searching. The data transmitter receives the keywords inputted by the users through the internet.

Next, the processing unit is configured to determine whether the received keywords correspond to the plurality of keywords in the database (Step S503). More specifically, the processing unit can analyze the characters entered by the users and retrieve the complete keywords or judge a part of the inputted characters as the keywords, and perform determination according to the judged keywords. If the above result of determination is "Yes", then it proceeds to step S504, the processing unit is configured to control the external network supply device through the internet and provide the corresponding pushing information on the platform directing to the inputted keywords. Wherein, the way of display of the pushing information has been clearly described in FIG. 3 and thus the descriptions will not be repeated here. In step S503, if the result of determination is "No", then it proceeds to step S505, the processing unit is configured to display the searching results of keywords directly on the platform of the user device. It should be noted that, in step S505, if the corresponding keywords cannot be determined, that is, there is no basis for sending the corresponding pushing information, the pushing information provided by the companies can be sent in a random manner in the database.

In step S504, the processing unit is further configured to display the searching results of keywords on the platform after the users access to the pushing information, that is, it proceeds to step S505. In the step of providing the corresponding pushing information on the platform, graphics, audio objects, video objects, text objects and interactive objects provided by the plurality of company servers may further be included. As previously described, the pushing information may synchronize with the plurality of company servers.

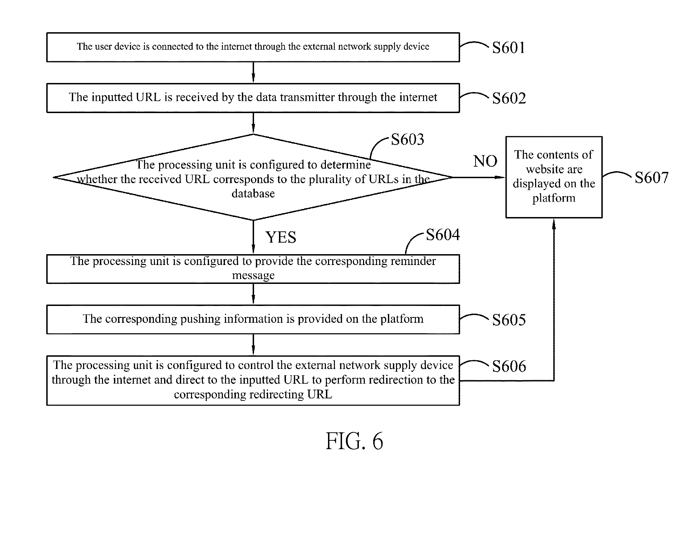

FIG. 6 is a flowchart according to the second embodiment of the method for information pushing and redirecting of the present invention. The second embodiment according to the method for information pushing and redirecting of the present invention will now be illustrated with reference to FIG. 6. Wherein, the second embodiment of the method for information pushing and redirecting also adopts the system for information pushing and redirecting as described above, which includes the following steps:

First, the user device is connected to the internet through the external network supply device (Step S601). Then, the inputted URL is received by the data transmitter through the internet (Step S602). Here, as described above, the users input URL of website to which the users intend to connect through the platform provided by the user device. The data transmitter receives the URL inputted by the users through the internet.

Next, the processing unit is configured to determine whether the received URL corresponds to the plurality of URLs in the database (Step S603). More specifically, the processing unit can analyze the characters entered by the users and retrieve keywords of the complete URL, for example, company abbreviations, judged as keywords and perform determination according to the judged keywords. Or the part of web domain included in the complete URL serves as a basis of determination. If the above result of determination is "Yes", then it proceeds to step S604, the processing unit is configured to control the external network supply device through the internet, provide the corresponding reminder message on the platform directing to the inputted URL and prepare to perform redirection according to the redirecting URL. Wherein, the way of display of the reminder message is as shown in FIG. 4 and thus the descriptions will not be repeated here. In step S603, if the result of determination is "No", then it proceeds to step S607, the processing unit is configured to display the contents of website directly on the platform of the user device. It should be noted that, in step S603, if the corresponding URL cannot be determined, that is, there is no basis for performing redirection, the pushing information provided by the companies can be sent in a random manner in the database.

Next, the corresponding pushing information is provided on the platform (Step S605) on the platform. This step and step S604 can be performed at the same time and is not limited to the order shown in the flowchart. The way of display of the pushing information is also as described in FIG. 4 and thus the descriptions will not be repeated here. In step S605, the processing unit is further configured to perform redirection of URL on the platform after the users access to the pushing information. In addition, in the step of providing the corresponding pushing information on the platform, graphics, audio objects, video objects, text objects and interactive objects provided by the plurality of company servers may further be included. As previously described, the pushing Information may synchronize with the plurality of company servers.

Finally, the processing unit is configured to control the external network supply device through the internet and direct to the inputted URL to perform redirection to the corresponding redirecting URL (S606), and the contents of website are displayed on the platform (step S607).

In conclusion, with the system and method for information pushing and redirecting provided by the present invention, the companies may perform synchronization and update information instantly at cloud and at anytime through the company servers based on the requirements. No matter the users intend to perform keywords searching or enter URL to access webpages, the information pushing can be efficiently performed on the platform. The cost of the network providers can also be reduced through providing the pushing information of the related companies. The demand for searching of the users can be satisfied and the most efficient information pushing can also be provided to the advertisement owners.

## Claims

1. A system for information pushing and redirecting (1, 2), applicable to at least one user device (100, 200, 202, 204, 300, 400), the at least one user device (100, 200, 202, 204, 300, 400) providing a platform (102, 202, 310, 410) for users to enter at least one keyword (301) to perform searching and enter uniform resource locator (URL)(401) to access webpages, the system for information pushing and redirecting (1, 2) comprising:
an external network supply device (104, 206), connected to the at least one user device (100, 200, 202, 204, 300, 400), and allowing the at least one user device (100, 200, 202, 204, 300, 400) to be connected to the internet (106, 208) through the external network supply device (104, 206) via the configuration;
a server (108, 210), connected to the external network supply device (104, 206) through the internet (106, 208), comprising:
a data transmitter (110, 212), receiving the keyword (301) or URL (401) inputted by an user through the at least one user device (100, 200, 202, 204, 300, 400) via the internet (106, 208);
a database (112, 214), storing a plurality of keywords (114, 216), a plurality of URLs (116, 218), pushing information (118, 220) corresponding to the plurality of keywords (114, 216) and a plurality of redirecting URLs (120, 222) corresponding to the plurality of URLs (116, 218);
a processing unit (122, 226), electrically connected to the data transmitter (110, 212) and the database (112, 214), determining whether the received keywords (301) or URLs (401) correspond to the plurality of keywords (114, 216) and the plurality of URLs (116, 218) in the database (112, 214) via the configuration, if so, further configuring the processing unit (122, 226) to control the external network supply device (104, 206) through the internet (106, 208) and direct to the inputted URL (401) of the at least one user device (100, 200, 202, 204, 300, 400) to perform redirection to the corresponding redirecting URL (120, 222), or direct to the entered keyword (301) to provide the corresponding pushing information (118, 220) on the platform (102, 202, 310, 410).

2. The system for information pushing and redirecting (1, 2) of claim 1, wherein the database (112, 214) further comprises a plurality of reminder messages (224, 406) corresponding to the plurality of URLs (116, 218), when the processing unit (122, 226) is configured to control the external network supply device (104, 206) through the internet (106, 208) and direct to the inputted URL (401) of the at least one user device (100, 200, 202, 204, 300, 400) to perform redirection, the corresponding reminder message (224, 406) is provided to the at least one user device (100, 200, 202, 204, 300, 400).

3. The system for information pushing and redirecting (1, 2) of claim 1, wherein the server (108, 210) is further connected to a plurality of company servers (226, 230, 232) through the internet (106, 208), and the pushing information (118, 220) and the plurality of redirecting URLs (120, 222) synchronize with the plurality of company servers (226, 230, 232).

4. The system for information pushing and redirecting (1, 2) of claim 3, wherein the corresponding pushing information (118, 220) provided on the platform (102, 202, 310, 410) further comprises graphics, audio objects, video objects, text objects and interactive objects provided by the plurality of company servers (226, 230, 232).

5. The system for information pushing and redirecting (1, 2) of claim 1, wherein the corresponding pushing information (118, 220) provided on the platform (102, 202, 310, 410) directing to the inputted keywords (301) is further configured to be displayed as searching results after the user accesses to the pushing information (118, 220).

6. A method for information pushing and redirecting, using the system for information pushing and redirecting (1, 2) of claim 1, the method for information pushing and redirecting comprising the following steps:
configuring the at least one user device (100, 200, 202, 204, 300, 400) to be connected to the internet (106, 208) through the external network supply device (104, 206);
configuring the data transmitter (110, 212) to receive the keyword (301) or URL (401) inputted by the user through the at least one user device (100, 200, 202, 204, 300, 400) via the internet (106, 208); and
configuring the processing unit (122, 226) to determine whether the received keywords (301) or URLs (401) correspond to the plurality of keywords (114, 216) and the plurality of URLs (116, 218) in the database (112, 214), if so, further configuring the processing unit (122, 226) to control the external network supply device (104, 206) through the internet (106, 208) and
direct to the inputted URL (401) of the at least one user device (100, 200, 202, 204, 300, 400) to perform redirection to the corresponding redirecting URL (120, 222), or direct to the entered keyword (301) to provide the corresponding pushing information (118, 220) on the platform (102, 202, 310, 410).

7. The method for information pushing and redirecting of claim 6, wherein the database (112, 214) further comprises a plurality of reminder messages (224, 406) corresponding to the plurality of URLs (116, 218), and in the step of configuring the processing unit (122, 226) to control the external network supply device (104, 206) through the internet (106, 208) and direct to the inputted URL (401) of the at least one user device (100, 200, 202, 204, 300, 400) to perform redirection, the corresponding reminder message (224, 406) is provided to the at least one user device (100, 200, 202, 204, 300, 400).

8. The method for information pushing and redirecting of claim 7, wherein the server (108, 210) is further connected to a plurality of company servers (226, 230, 232) through the internet (106, 208), and the pushing information (118, 220) and the plurality of redirecting URLs (120, 222) are synchronized with the plurality of company servers (226, 230, 232).

9. The method for information pushing and redirecting of claim 8, wherein in the step of configuring the processing unit (122, 226) to provide the corresponding pushing information (118, 220) on the platform (102, 202, 310, 410), the corresponding pushing information (118, 220) further comprises graphics, audio objects, video objects, text objects and interactive objects provided by the plurality of company servers (226, 230, 232).

10. The method for information pushing and redirecting of claim 6, wherein in the step of configuring the processing unit (122, 226) to provide the corresponding pushing information (118, 220) on the platform (102, 202, 310, 410), the corresponding pushing information (118, 220) is further configured to be displayed as searching results after the user accesses to the pushing information (118, 220).
